# EUROPÄISCHE PATENTSCHRIFT

(11) **EP 1 175 748 B1**
(45) Veröffentlichungstag und Bekanntmachung des Hinweises auf die Patenterteilung: **28.07.2004**
(21) Anmeldenummer: 00925141.4
(22) Anmeldetag: 29.03.2000
(51) Int. Cl.: H04L 1/24

(54) **VERFAHREN ZUM MESSEN DER EMPFANGSSEITIGEN BITFEHLERRATE EINES DVB-ÜBERTRAGUNGSSYSTEMS**
METHOD FOR MEASURING THE RECEIVER-SIDE BIT ERROR RATE OF A DVB TRANSMISSION SYSTEM
PROCEDE POUR LA MESURE DES TAUX D'ERREURS SUR LES BITS D'UN SYSTEME DE TRANSFERT DVB

(30) Priorität: 30.04.1999 DE 19919900; 10.11.1999 DE 19954067
(43) Veröffentlichungstag der Anmeldung: 30.01.2002
(73) Patentinhaber: Rohde & Schwarz GmbH & Co. KG, 81671 München (DE)
(72) Erfinder: BALZ, Christoph, D-81543 München (DE); ZIMMERMANN, Franz Josef, D-85570 Marktschwaben (DE); RIPP, Harald, D-81829 München (DE); HANDL, Josef, D-85586 Poing (DE)
(74) Vertreter: Körfer, Thomas, Dipl.-Phys.
(86) Internationale Anmeldenummer: PCT/EP2000/002772
(87) Internationale Veröffentlichungsnummer: WO 2000/067418

(56) Entgegenhaltungen:
- EP-A- 0 752 769
- US-A- 3 824 548
- US-A- 4 920 537

## Beschreibung

Die Erfindung betrifft ein Verfahren zum Messen der empfangsseitigen Bitfehlerrate der Übertragungsstrecke (Kabel, Satellit oder terrestrisch) eines DVB-(Digital-Video Broadcast)-Übertragungssystems laut Oberbegriff des Hauptanspruches.

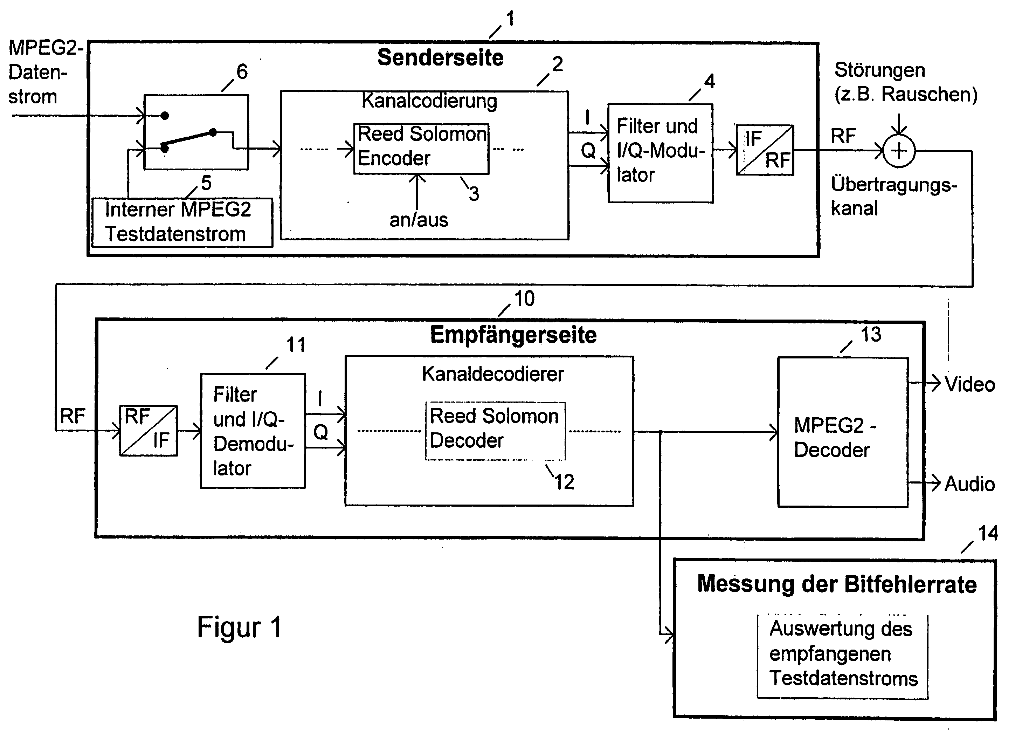

Bei dem zwischenzeitlich durch Normung eingeführten DVB-Übertragungssystem über Kabel (DVB-C), Satellit (DVB-S) bzw. über terrestrische Sender (DVB-T) wird gemäß Figur 1 der zu übertragende Datenstrom im genormten Datenformat MPEG2 im Sender 1 einem Kanalcodierer 2 mit einem sogenannten Reed-Solomon-Coder 3 zugeführt. Die im Kanalcodierer 2 erzeugten I- und Q-Komponenten werden nach Durchlaufen eines Filters und IQ-Modulators 4 aus der Zwischenfrequenz IF in die Hochfrequenzlage RF umgesetzt und dann über Kabel, Satellit oder terrestrische Sender als Übertragungsstrecke zum Empfänger 10 übertragen, in welchem in umgekehrter Reihenfolge nach Umsetzung in die Zwischenfrequenz IF sowie Filterung und IQ-Demodulation im Demodulator 11 die Daten wieder durch einen Reed-Solomon-Decoder 12 decodiert werden. Der so wieder rückgewonnene Datenstrom MPEG2 wird dann in einem MPEG2-Decoder 13 decodiert und als Video- und Audio-Signal weiter verarbeitet.

Dieses DVB-Übertragungssystem mit seinen verschiedenen Komponenten ist bekannt und näher beschrieben in der DVB-Norm ETS300429, ETS 300421 und ETS 300744 bzw. Reimers U.: Digitale Fernsehtechnik, Springer 1997.

Auch die dabei verwendeten Reed-Solomon-Coder und Decoder sind bekannt und werden beschrieben bei Reimers U.: Digitale Fernsehtechnik, Springer 1997 und und Lin S., Costello D.J. Error Control Coding, Prentice-Hall 1983.

Ein wichtiges Kriterium für die Übertragungsqualität eines solchen DVB-Übertragungssystems ist die Bitfehlerrate. Zur empfangsseitigen Messung dieser Bitfehlerrate ist es bekannt, das ganze Kodiersystem auszuschalten und bei ausgeschaltetem Reed-Solomon-Coder und Decoder durch Einspeisen eines Testsignals die Bitfehlerrate zu messen (EP-A-0 752 769, Seite 2, Zeilen 17-22). Es ist ferner bekannt anhand der Anzahl der korrigierten Symbole im Reed-Solomon-Decoder die Bitfehlerrate zu berechnen (EP-A-0 752 769). Ersteres Verfahren ist sehr zeitaufwendig und setzt einen erheblichen Eingriff in das gesamte Übertragungssystem voraus, das zweite Verfahren mit der indirekten Bestimmung der Bitfehlerrate ist nicht genau genug.

Es ist Aufgabe der Erfindung, ein Verfahren aufzuzeigen, mit dem auf einfache Weise bei geringstmöglichem Eingriff in das Übertragungssystem empfangsseitig die Bitfehlerrate gemessen werden kann.

Diese Aufgabe wird ausgehend von einem Verfahren laut Oberbegriff des Hauptanspruches durch dessen kennzeichnende Merkmale gelöst. Vorteilhafte Weiterbildungen insbesondere bezüglich des hierbei verwendeten Test-Datenströmes ergeben sich aus den Unteransprüchen.

Gemäß der Erfindung wird zur Messung der empfangsseitigen Bitfehlerrate senderseitig der Reed-Solomon-Coder abgeschaltet wird und senderseitig ein derartiger Test-Datenstrom eingespeist wird, daß der empfangsseitige Reed-Solomon-Decoder diesen Datenstrom als unkorrigierbar erkennt und ihn somit unkorrigiert zum Ausgang durchläßt, so daß damit dann an diesem unkorrigierten Test-Datenstrom in bekannter Weise die Bitfehlerrate gemessen werden kann. Für die Erzeugung dieses speziellen Test-Datenstromes gibt es verschiedene Möglichkeiten. Eine Möglichkeit ist im Unteranspruch 3 aufgezeigt, eine weitere im Unteranspruch 4. Die im Unteranspruch 4 aufgezeigte Möglichkeit besitzt den zusätzlichen Vorteil, daß hierfür ein beliebiger Nutzdatenstrom benutzt werden kann und zur Bitfehlerratenmessung die Übertragung von Nutzdaten nicht gestört wird und nicht unterbrochen werden muß.

Die Erfindung wird im Folgenden anhand von zwei Ausführungsbeispielen näher erläutert.

Die Figur 1 zeigt eine Übertragungsstrecke eines DVB-Übertragungssystems mit Bitfehlerratenmessung gemäß einem ersten Ausführungsbeispiel.

Die Figur 2 zeigt eine Übertragungsstrecke eines DVB-Übertragungssystems mit Bitfehlerratenmessung gemäß einem zweiten Ausführungsbeispiel.

Im Ausführungsbeispiel nach Figur 1 wird senderseitig ein spezieller Test-Datenstrom 5 benutzt, der über einen Umschalter 6 anstelle des Nutzdatenstromes im Kanalcodierer 2 zuführbar ist. Dieser spezielle Test-Datenstrom erfüllt den MPEG2-Standard. Er besitzt einen Header und als Nutzdaten wird eine bekannte Zufallsfolge (z.B. nach CCITT 0.151) eingefügt. Außerdem wird der Reed-Solomon-Coder 3 senderseitig abgeschaltet und es werden damit nicht mehr wie im Normalbetrieb jeweils an die 188 Bytes des eingangsseitigen Datenstromes MPEG2 die vom Reed-Solomon-Coder 3 erzeugten 16 Korrekturbytes angehängt. Anstelle dieser 16 Korrekturbytes des Reed-Solomon-Encoders werden im Test-Datenstrom 16 Testbytes erzeugt, welche zu den 16 Korrekturbytes unkorreliert sind und eine statistische Verteilung von Nullen und Einsen aufweisen. Der Test-Datenstrom wird nach Durchlaufen der Übertragungsstrecke im Empfänger 10 dem Reed-Solomon-Decoder 12 zugeführt, dieser erkennt anhand der angehängten 16 Testbytes, daß diese nicht zu den vorangegangenen 188 Nutzbytes passen. Auf diese Weise wird eine Fehlerkorrektur seitens des Reed-Solomon-Decoders 12 verhindert und am Ausgang des Reed-Solomon-Decoders 12 wird so der unkorrigierte Test-Datenstrom ausgegeben, der zur Bitfehlerratenmessung in der Meßeinrichtung 14 mit dem senderseitig eingespeisten Test-Datenstrom verglichen wird. Für die Messung der Bitfehlerrate ist jedes übliche bekannte Verfahren geeignet, wie sie beispielsweise beschrieben sind bei Reimers U.: Digitale Fernsehtechnik, Springer 1997.

Damit ist mir kürzester Meßzeit von weniger als 1 Sekunde die Bestimmung der Bitfehlerrate eines solchen Übertragungssystems möglich, ohne daß vor dem Reed-Solomon-Decoder 12 des Empfängers ein entsprechender Ausgang erforderlich ist und ohne daß der empfängerseitige Reed-Solomon-Decoder abgeschaltet werden muß.

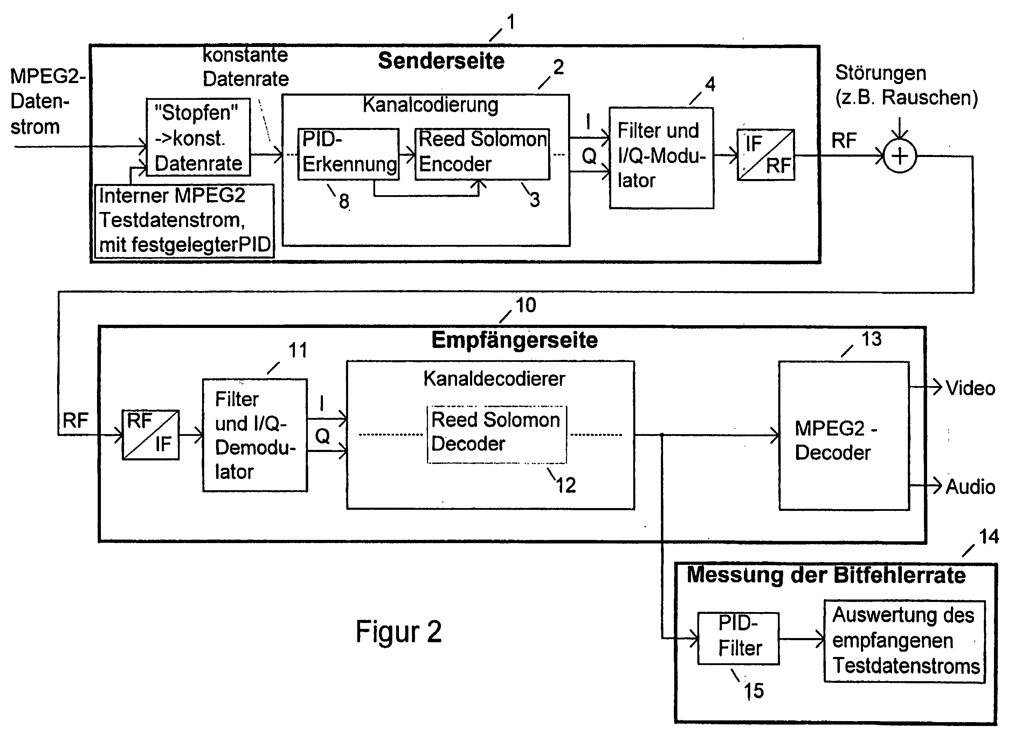

Figur 2 zeigt zeigt eine andere Möglichkeit für die Erzeugung des unkorrigierbaren Test-Datenstromes. Es wird die bei solchen DVB-Übertragungssystemen übliche Verfahrensweise benutzt, nämlich die erzeugten Nutzdaten vor dem Reed-Solomon-Coder 3 senderseitig auf die für das Übertragungsverfahren benötigte Bitrate aufzufüllen, so daß eine konstante Datenrate über den Sender übertragen wird. Dazu werden die Nutzdatenpakete, die im Header entsprechend den unterschiedlichen übertragenen DVB-Programmen (Video oder Audio) durch entsprechende PID (Programm Identification)-Daten gekennzeichnet sind, mit sogenannten Nulldatenpaketen ergänzt, die als solche ebenfalls mit einer definierten PID-Kennung gekennzeichnet sind, im allgemeinen mit einer Datenfolge 1FFF hex. Diese nur zum Auffüllen dienende Nulldatenpakete werden im Decoder 12 nicht weiter ausgewertet, sondern verworfen. Es werden also diese Nulldatenpakete für die Bitfehlerratenmessung ausgenutzt, indem sie mit einer Folge von Testdaten gefüllt werden, beispielsweise mit einer Datenfolge 111..., vorzugsweise jedoch mit einer bekannten Zufallsdatenfolge PRBS (Pseudo Random Bitsequenz). Im Coder 3 befindet sich senderSeitig ein PID-Filter 8, welches erkennt, ob es sich um ein zu codierendes Nutzdatenpaket oder um ein Nulldatenpaket handelt. Wird ein Nulldatenpaket erkannt, wird der Reed-Solomon-Coder 3 für dieses Nulldatenpaket abgeschaltet. Der Reed-Solomon-Decoder 12 auf der Empfangsseite erkennt dann alle diese Nulldatenpakete als mit unkorrigierbaren Fehlern behaftet und läßt sie deshalb unverändert passieren, so daß an ihnen am Ausgang des - Decoders 12 in bekannter Weise die Bitfehlerrate im Meßgerät 14 bestimmt werden kann. Nur bei empfangenen Nutzdatenpaketen werden eventuelle Fehler vor dem Reed-Solomon-Decoder 12 von letzterem korrigiert und damit bleibt für die Nutzdatenpakete eine optimale Übertragung gewährleistet, die nicht durch die Testdatenfolge gestört wird. Bei abgeschaltetem Reed-Solomon-Coder 3 werden senderseitig nicht mehr wie im Normalbetrieb jeweils an die 188 Bytes des eingangsseitigen Datenstromes MPEG2 die vom genormten Coder erzeugten 16 Korrekturbytes angehängt, sondern es werden 16 Bytes erzeugt, welche zu den 16 Korrekturbytes des Coders unkorreliert sind und eine statistische Verteilung von Nullen und Einsen aufweisen. Für die Messung der Bitfehlerrate ist jedes übliche bekannte Verfahren geeignet, beispielsweise das im Buch von Reimers U: Digitale Fernsehtechnik, Springer-Verlag 1997 beschriebene.

In der empfangsseitigen Meßanordnung 14 zur Bitfehlerraten-Bestimung ist ein PID-Filter 15 vorgesehen, so daß nur solche unkorrigierten Nulldatenpakete ausgewertet werden.

## Patentansprüche

1. Verfahren zum Messen der empfangsseitigen Bitfehlerrate der Übertragungsstrecke eines DVB-Übertragungssystems, bei dem der zu übertragende Datenstrom senderseitig mittels eines Reed-Solomon-Coders (3) kanalcodiert und empfangsseitig mittels eines entsprechenden Reed-Solomon-Decoders (12) kanaldecodiert wird,
**dadurch gekennzeichnet,**
daB senderseitig der Reed-Solomon-Coder (3) abgeschaltet wird und senderseitig ein derartiger Test-Datenstrom eingespeist wird,
daß der empfangsseitige Reed-Solomon-Decoder (12) einen Datenstrom mit unkorrigierbaren Fehlern erkennt und diesen unkorrigiert zum Ausgang durchläßt, und mit diesem unkorrigierten Test-Datenstrom dann die Bitfehlerrate bestimmt wird.

2. Verfahren nach Anspruch 1,
**dadurch gekennzeichnet,**
**daß** die Bitfehlerrate durch Vergleich des am Ausgang des Decoders ausgegebenen unkorrigierten Test-Datenstroms mit dem senderseitig eingespeisten Test-Datenstrom gemessen wird.

3. Verfahren nach Anspruch 1 oder 2,
**dadurch gekennzeichnet,**
**daß** senderseitig ein Test-Datenstrom eingespeist wird, der den MPEG2-Standard erfüllt, und dem anstelle der im Normalbetrieb durch den Reed-Solomon-Coder je Datenstrom-Rahmen erzeugten Korrekturbytes eine entsprechende Anzahl von unkorrelierten und statistisch verteilten Test-Bytes angehängt wird, so daß bei abgeschaltetem senderseitigen Coder der empfangsseitige Decoder diesen Testdatenstrom unkorrigiert zum Auslaß durchläßt.

4. Verfahren nach Anspruch 1 oder 2,
**dadurch gekennzeichnet,**
**daß** der Test-Datenstrom dadurch erzeugt wird, daß einem den MPEG2-Standard erfüllenden Nutzdatenstrom, dessen Nutzdatenpakete durch Identifikationsdaten gekennzeichnet sind, senderseitig vor dem Reed-Solomon-Coder ein Testdatenstrom hinzugefügt wird, dessen Pakete als Nulldatenpakete entsprechend gekennzeichnet sind, so daß bei abgeschaltetem Reed-Solomon-Coder der empfangsseitige Decoder diesen Testdatenstrom unkorrigiert zum Ausgang durchläßt.

5. Verfahren nach Anspruch 4,
**dadurch gekennzeichnet,**
**daß** im Reed-Solomon-Coder ein Identifikationsdaten-Kennungsfilter (8) vorgesehen ist, das bei Erkennung eines Nulldatenpaketes den Reed-Solomon-Coder abschaltet, so daß unkorrigierbare Daten übertragen werden.

6. Verfahren nach Anspruch 4 oder 5,
**dadurch gekennzeichnet,**
daB empfangsseitig vor dem Bitfehlerratenmesser ein entsprechendes Identifikationsdaten-Kennungsfilter (15) vorgesehen ist und zur Bitfehlerratenbestimmung nur die als Nulldatenpakete erkannten Datenpakete ausgewertet werden.

7. Verfahren nach einem der Ansprüche 4, 5 oder 6,
**dadurch gekennzeichnet,**
**daß** bei Nulldatenpaketen die vom Reed-Solomon-Coder erzeugten Bytes durch eine Datenfolge von unkorrelierten, statistisch verteilten Daten ersetzt werden

## Claims

1. Method for the measurement of the receiving-end bit error rate of a transmission link of a DVB transmission system in which the data stream to be transmitted is channel-encoded at the transmitter end by means of a Reed-Solomon encoder (3) and is channel-decoded at the receiving end by means of a corresponding Reed-Solomon decoder (12), **characterized in that** the Reed-Solomon encoder (3) is switched off at the transmitter end and a test data stream is injected at the transmitter end that is such that the Reed-Solomon decoder (12) at the receiving end detects a data stream containing uncorrectable errors and lets it through to the output in said uncorrected form and the bit error rate is then determined using said uncorrected test data stream.

2. Method according to Claim 1, **characterized in that** the bit error rate is measured by comparing the uncorrected test data stream outputted at the output of the decoder with the test data stream injected at the transmitter end.

3. Method according to Claim 1 or 2, **characterized in that** a test data stream that complies with the MPEG2 standard is injected at the transmitter end and, instead of the correction bytes generated by the Reed-Solomon encoder per data stream frame in normal operation, a corresponding number of uncorrelated und randomly distributed test bytes is attached so that, with the transmitter-end encoder switched off, the receiving-end decoder lets said test data stream through to the output in uncorrected form.

4. Method according to Claim 1 or 2, **characterized in that** the test data stream is generated in such a way that there is added to a useful data stream that complies with the MPEG2 standard and whose useful-data packets are **characterized by** identification data at the transmitter end upstream of the Reed-Solomon encoder a test data stream whose packets, as zero-data packets, are correspondingly characterized so that, with the Reed-Solomon encoder switched off, the receiving-end decoder lets said test data stream through to the output in uncorrected form.

5. Method according to Claim 4, **characterized in that** there is provided in the Reed-Solomon encoder a data identifier filter (8) that, on recognizing a zero-data packet, switches off the Reed-Solomon encoder so that uncorrectable data are transmitted.

6. Method according to Claim 4 or 5, **characterized in that** a corresponding data identifier filter (15) is provided at the receiving end upstream of the bit error rate measuring device and only the data packets detected as zero-data packets are evaluated for the purpose of bit error rate determination.

7. Method according to one of Claims 4, 5 or 6, **characterized in that**, in the case of zero-data packets, the bytes generated by the Reed-Solomon encoder are replaced by a data sequence of uncorrelated, randomly distributed data.

## Revendications

1. Procédé pour la mesure du taux d'erreurs sur les bits du côté récepteur du trajet de transfert d'un système de transfert DVB, dans lequel le flux de données à transférer est codé par canal, du côté émetteur, à l'aide d'un codeur Reed-Solomon (3) et décodé par canal, du côté récepteur, à l'aide d'un décodeur Reed-Solomon approprié (12),
**caractérisé en ce que**
du côté émetteur, le codeur Reed-Solomon (3) est mis hors circuit et un tel flux de données d'essai est entré du côté émetteur que
le décodeur Reed-Solomon approprié (12) du côté récepteur identifie un flux de données avec des erreurs non corrigibles et le laisse passer non corrigé vers la sortie, et le taux d'erreurs sur les bits est alors déterminé avec ce flux de données d'essai non corrigé.

2. Procédé selon la revendication 1,
**caractérisé en ce que**
le taux d'erreurs sur les bits est mesuré en comparant le flux de données d'essai non corrigé sorti à la sortie du décodeur au flux de données d'essai entré du côté émetteur.

3. Procédé selon la revendication 1 ou 2,
**caractérisé en ce que**
un flux de données d'essai est entré du côté émetteur, lequel flux répond à la norme MPEG2, et un nombre approprié d'octets d'essai sans corrélation et répartis statistiquement est ajouté à celui-ci au lieu des octets de correction générés en fonctionnement normal par le codeur Reed-Solomon pour chaque trame de flux de données, de sorte que, lorsque le codeur du côté émetteur est mis hors circuit, le décodeur du côté récepteur laisse passer ce flux de données d'essai non corrigé vers la sortie.

4. Procédé selon la revendication 1 ou 2,
**caractérisé en ce que**
le flux de données d'essai est généré **en ce qu'**un flux de données d'essai, dont les paquets sont identifiés de manière appropriée comme paquets de données zéro, est ajouté, avant le codeur Reed-Solomon, du côté émetteur, à un flux de données utiles répondant à la norme MPGE2, dont les paquets de données utiles sont identifiés par des données d'identification, de sorte que, lorsque le codeur Reed-Solomon est mis hors circuit, le décodeur du côté récepteur laisse passer ce flux de données d'essai non corrigé vers la sortie.

5. Procédé selon la revendication 4,
**caractérisé en ce que**
un filtre d'identification des données d'identification (8), qui met le codeur Reed-Solomon hors service en cas d'identification d'un paquet de données zéro, est prévu dans le codeur Reed-Solomon, de sorte que des données non corrigibles sont transférées.

6. Procédé selon la revendication 4 ou 5,
**caractérisé en ce que**
un filtre d'identification des données d'identification (15) approprié est prévu du côté récepteur et **en ce que**, pour la détermination du taux d'erreurs sur les bits, seuls les paquets de données identifiés comme paquets de données zéro sont exploités.

7. Procédé selon l'une quelconque des revendications 4, 5 ou 6,
**caractérisé en ce que**
pour les paquets de données zéro, les octets générés par le codeur Reed-Solomon sont remplacés par une suite de données de données sans corrélation, statistiquement réparties.
